# EUROPEAN PATENT SPECIFICATION

(11) **EP 2 584 422 B1**
(45) Date of publication and mention of the grant of the patent: **14.05.2014**
(21) Application number: 12188911.7
(22) Date of filing: 17.10.2012
(51) Int. Cl.: G05D 1/10

(54) **Method for a noise abatement procedure for an aircraft**
Verfahren für ein Schalldämmungsverfahren für Flugzeuge
Procédé pour une procédure d'atténuation du bruit d'un avion

(30) Priority: 18.10.2011 US 201113276007
(43) Date of publication of application: 24.04.2013
(73) Proprietor: General Electric Company, Schenectady, NY 12345 (US)
(72) Inventor: Bakker, Michael John, Grand Rapids, MI Michigan 49512 (US); Hochwarth, Joachim Karl Ulf, Grand Rapids, MI Michigan 49512 (US); Flanary, Sean Edward, Grand Rapids, MI Michigan 49512 (US)
(74) Representative: Williams, Andrew Richard

(56) References cited:
- WO-A1-03/024789
- WO-A1-03/030125
- US-A1- 2005 075 763
- US-A1- 2009 012 661

## Description

### BACKGROUND OF THE INVENTION

Noise levels surrounding airports present a unique problem for both the communities surrounding the airport and the airline operators, especially during takeoff and landings when the aircraft are closest to the ground. The communities would like to see a reduction in noise levels while the airline operators want to climb out more quickly to take advantage of greater efficiencies realized at higher altitudes. Many airports require that aircraft honor a noise exposure limit in the surrounding area. Exceeding these limits can result in fines or restricted operation. A surrounding area of an airport is shown in the document WO 03/024 789 A1.

### BRIEF DESCRIPTION OF THE INVENTION

Accordingly, a method of operating an aircraft is provided in accordance with claim 1 herein.

### BRIEF DESCRIPTION OF THE DRAWINGS

In the drawings:
Figure 1 is a schematic view of a flight path flown according to a method known in the prior art for reducing noise.
Figure 2 is a schematic view of a flight path flown according to an alternative method known in the prior art for reducing noise.
Figure 3 is a schematic view of an illustrative noise abatement zone and an aircraft flight path.
Figure 4 is a schematic view of an illustrative noise abatement zone and a variety of aircraft flight profiles resulting from operation according to an embodiment of the invention.
Figure 5 is a flow chart of a method for operating an aircraft at a performance profile having a noise level acceptable for the noise abatement zone when the aircraft is flown within the noise abatement zone according to a second embodiment of the invention.
Figure 6 is a schematic view comparing the known flight path of Figure 1 with a flight profile of Figure 4, which results from operation according to an embodiment of the invention.

### DESCRIPTION OF EMBODIMENTS OF THE INVENTION

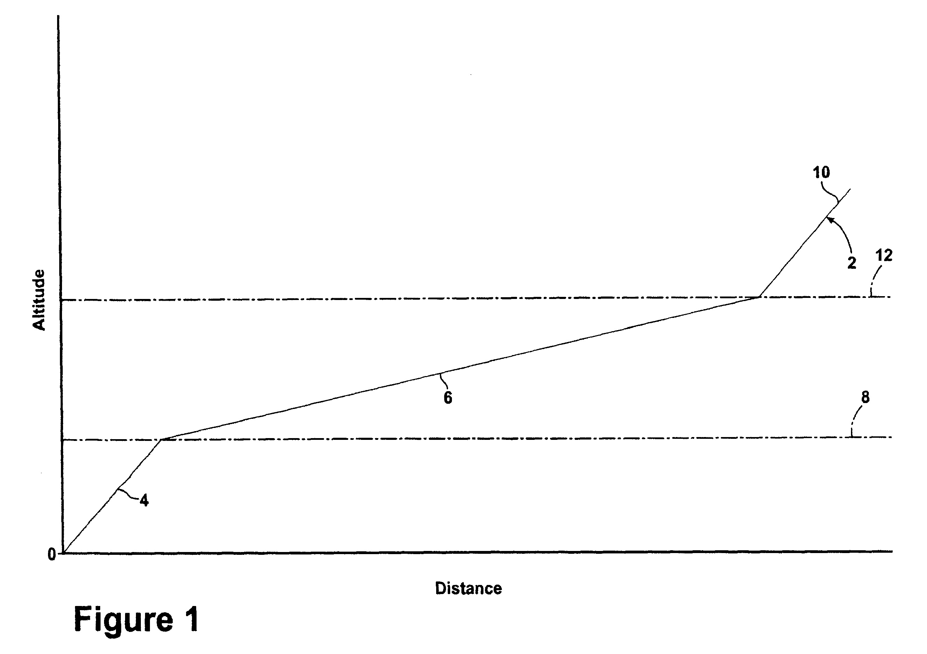

Figure 1 illustrates several flight profiles known in the art for reducing noise. A first flight profile 2 illustrates the results of a known method for reducing noise that employs an altitude-based scheme where the thrust is changed from a takeoff thrust 4 to a reduced climb setting 6 once the aircraft climbs above a predetermined lower altitude 8. The throttles are then returned to the normal climb thrust setting 10 once the aircraft climbs above a second higher predetermined altitude 12.

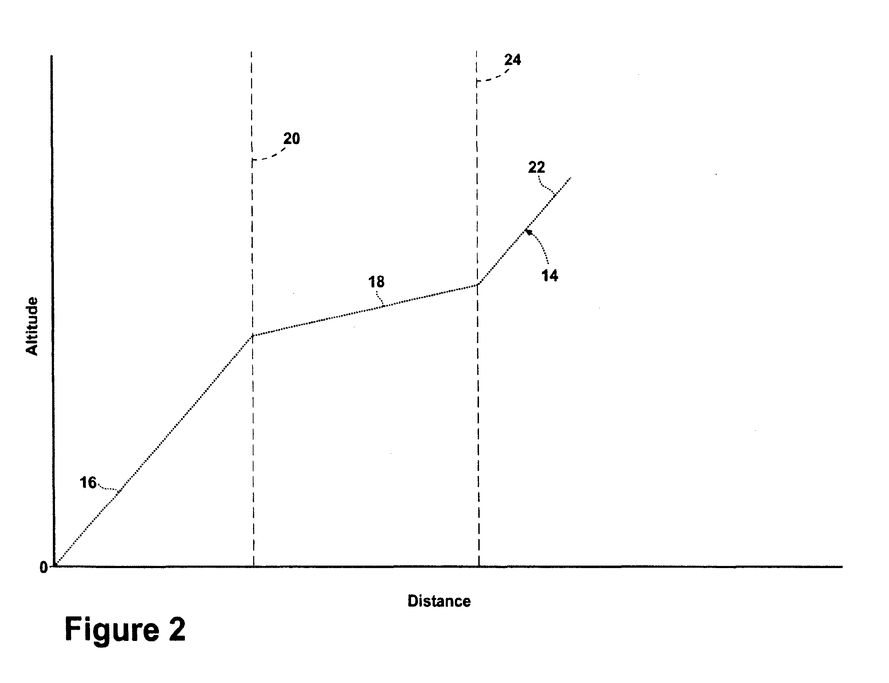

Figure 2 illustrates a second flight profile 14 that is the result of an alternate known noise reduction method that uses location as the driving factor for reducing thrust and has all aircraft reduce thrust once a noise abatement area is reached regardless of altitude. As illustrated, the second flight profile 14 is changed from a takeoff thrust 16 to a reduced climb setting 18 once the aircraft reaches a starting noise abatement point 20, which is a predetermined range from the airport represented by mile "0", and only returns the throttles to a normal climb thrust 22 once the aircraft has traveled a distance to an end noise abatement point 24, which is also a predetermined range from the airport. Both of these known methods help to reduce noise but are overly conservative for aircraft with certain weights and climb capabilities.

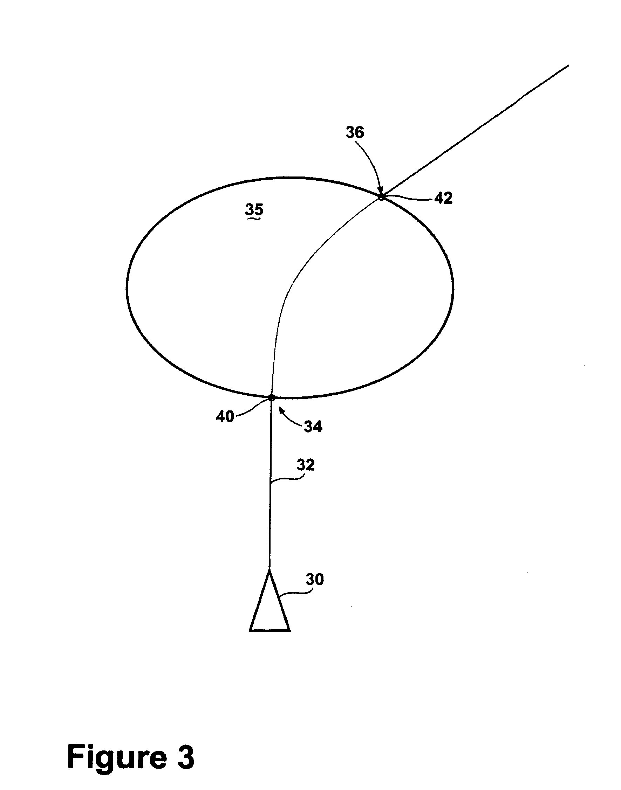

Referring now to Figure 3, according to one embodiment of the invention, a method of operating an aircraft 30 capable of operating at a plurality of performance profiles having differing noise levels includes flying the aircraft 30 along a flight path 32, determining when the flight path 32 intersects a noise abatement zone 34, and operating the aircraft 30 at a performance profile having a noise level acceptable for the noise abatement zone 34 when the aircraft 30 is flown within the noise abatement zone 34. The noise abatement zone 34 may correlate to a noise-sensitive area 35 near the airport such as a residential neighborhood or a business community. The boundaries of such noise-sensitive areas 35 may be set by various groups and/or authorities and may begin somewhere between the physical boundary of the community and a given runway or departure path from the airport.

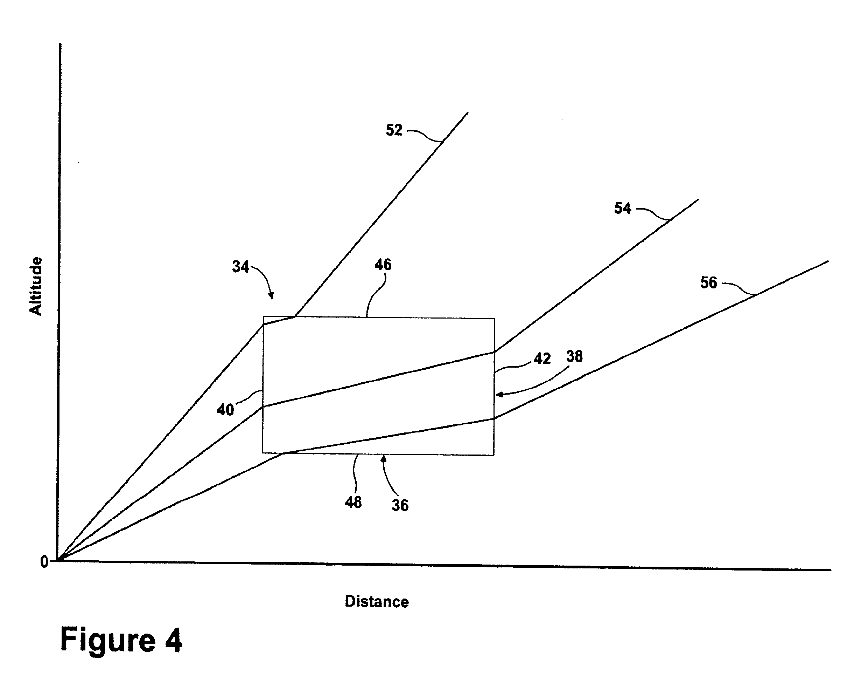

It is contemplated that the noise abatement zone 34 may be defined in at least a two dimensional space including both a ground path dimension 36 and an altitude dimension 38 (Figure 4). The ground path dimension 36 may include a start point 40 and an end point 42 and such start points and end points 40 and 42 may correlate to points along the ground correlating to the noise sensitive area 35 that the flight path 32 intercepts. Thus, the start point 40 may correspond to the point where the flight path 32 enters the noise abatement zone 34 and the end point 42 may correspond to the point where the flight path 32 exits the noise abatement zone 34. It will be understood that the noise abatement start and end points 40 and 42 need not be in a straight path and that the noise sensitive area 35 need not be geometrically defined or of a predetermined geometric shape. The noise sensitive area 35 is illustrated as an ellipse in Figure 3, but can be of any closed or non-closed shape.

As Figure 3 is a top down view, the altitude dimension 38 of the noise abatement zone 34 may be more clearly illustrated with respect to Figure 4, which is a side view of the zone. Figure 4 schematically illustrates the noise abatement zone 34 as having both the ground path dimension 36 and the altitude dimension 38. The altitude dimension 38 may include a maximum altitude 46 as well as a minimum altitude 48. It is contemplated that the minimum altitude 48 may be above a ground level numerically represented with a 0 in the illustration. Such a minimum altitude 48 may be set such that the thrust settings of the aircraft 30 are not reduced until the aircraft 30 has attained a certain altitude, for example 800 feet.

It is contemplated that the intersection of the flight path 32 with the noise abatement zone 34 could be computed on-board the aircraft 30 via a Flight Management Computer (FMC) or determined by an Electronic Flight Bag (EFB) or ground-based tool and up-linked to the aircraft 30. The aircraft 30 may download both the noise abatement zone dimensions and the corresponding acceptable noise level. The intersection of the flight path 32 with the noise abatement zone 34 may be identified prior to the aircraft 30 entering the noise abatement zone 34. It is contemplated that the maximum and minimum altitudes 46 and 48 as well as the start and end locations 40 and 42 may be input and/or computed in various ways. By way of non-limiting examples, the start and end locations 40 and 42 may be based on pilot selections or pre-defined noise abatement departure procedures included within the navigation database or from individual waypoint designations. Alternatively, noise abatement zones may be defined in a new Noise Abatement Area Database (NAADB) wherein the start and end locations may be automatically determined based on the flight path's intersection with the noise abatement area based on a selected departure procedure.

The aircraft 30 may be capable of operating at a number of performance profiles. For example, it is contemplated that the aircraft may be capable of operating at a performance profile related to a takeoff climb, which may have a corresponding greater thrust and a maximum climb angle. The aircraft 30 may also be capable of operating at a performance profile having a reduced thrust with a corresponding decreased climb angle, which creates less noise for when the aircraft is within the noise abatement zone 34. The aircraft 30 may also have a performance profile with a climb thrust, which is less than the takeoff thrust but greater than the reduced thrust. The above mentioned performance profiles are by way of non-limiting examples only and it is contemplated that the aircraft 30 may have any number of additional or alternative performance profiles. It is also contemplated that the performance profiles may include that the thrust setting may be adjusted based on altitude such that the thrust may be increased as the altitude of the aircraft increases.

The embodiments of the inventive method described herein incorporate both altitude and location based considerations into an integrated scheme where the performance profile of the aircraft 30 is only adjusted when necessary based on distance from the noise sensitive area both horizontally and vertically. Further, multiple factors are considered in determining when to restore thrust during operation of the aircraft 30. In this manner, the throttle need only be reduced when necessary and the aircraft 30 may operate more efficiently while still satisfying noise exposure constraints.

Several flight profiles 52, 54, and 56 have been illustrated with respect to the noise abatement zone 34 and are a result of such embodiments of the inventive method. Each flight profile illustrates that the thrust is reduced from an initial thrust, such as a takeoff thrust, to a performance profile having a reduced thrust and a noise level acceptable for the noise abatement zone once both the minimum altitude 48 and the start location 40 have been reached by the aircraft. Such a performance profile is maintained until either the maximum altitude 46 or the end location 42 is reached. The least constraining factor is used to produce a flexible solution that helps to both reduce noise and maximize climb performance. For example, the flight profile 52 has a restored performance profile after a certain altitude was reached regardless of the distance component and the flight profiles 54 and 56 have restored performance profiles after the end location was reached even though the maximum altitude was not reached.

Although not illustrated, it is also contemplated that an embodiment of the invention may contemplate a three-dimensional noise abatement zone. Such a three-dimensional zone may also include a time dimension. It is also contemplated that a noise budget allowed within the noise abatement zone may be identified and may be used to vary the performance profile at which the aircraft is operated at when the aircraft is flown within the noise abatement zone. The noise budget may be a quota that represents the total sum of noise allowed over a specific period. Such a noise budget may be airline operator specific. A ground based tool may keep track of an airline fleet's overall noise budget and the performance profile of the aircraft 30 may be varied based on the available noise budget remaining and the currently applicable noise limits. This would allow an airline to operate most efficiently while avoiding any penalties associated with exceeding noise budgets and limits.

It is contemplated that the performance profile having the noise level acceptable for the noise abatement zone may be determined based on the identified noise budget and that the performance profile may include adjusting the thrust at which the aircraft is operating within the noise abatement zone depending upon the sound budget. By way of non-limiting example, the thrust setting may be adjusted based on a slewing factor or a noise factor that is altitude based. Thus, the performance profile may include that the thrust may be increased as the altitude of the aircraft increases towards the predetermined maximum altitude. By way of additional non-limiting example, the thrust setting may be adjusted independently of the noise factor to slowly restore thrust while staying below a certain noise level when the aircraft is within the noise abatement zone.

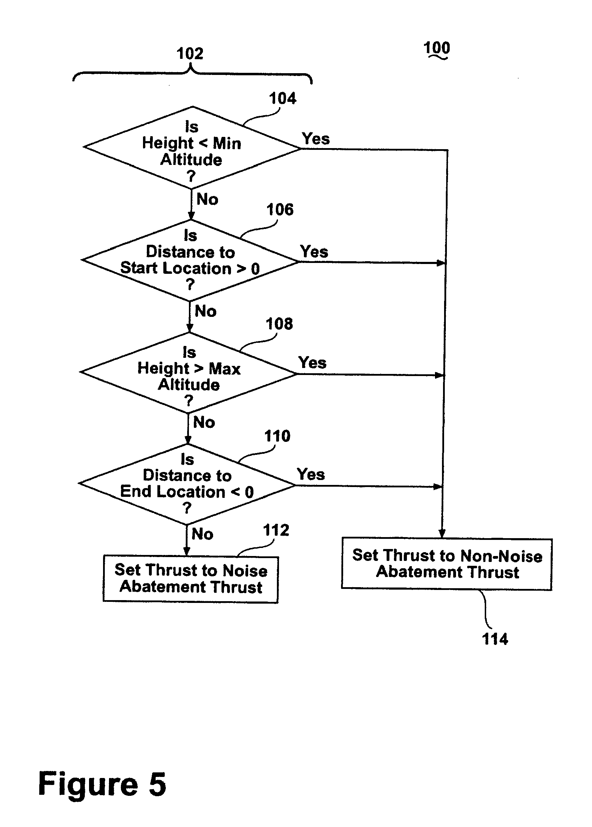

One embodiment of a method of the invention for operating an aircraft at a performance profile having a noise level acceptable for a noise abatement zone when the aircraft is flown within the noise abatement zone is illustrated in Figure 5. The illustrative method 100, by way of non-limiting example, is with respect to a two dimensional noise abatement zone such as the one shown in the previous figure. The method 100 assumes that the aircraft is flying along a flight path and that a two-dimensional noise abatement zone has been defined in terms of minimum and maximum altitude dimensions and start and exit ground path locations. The method 100 may be initiated automatically when the aircraft begins flying along its flight path and may be executed by a controller of the aircraft. The sequence depicted is for illustrative purposes only and is not meant to limit the method 100 in any way as it is understood that the portions of the method may proceed in a different logical order, additional or intervening portions may be included, or described portions of the method may be divided into multiple portions, or described portions of the method may be omitted without detracting from the described method.

The method 100 begins with a noise abatement departure procedure generally denoted as 102. The noise abatement departure procedure 102 begins at 104 where a controller in the aircraft may determine if the height of the aircraft is less than a predetermined minimum altitude. Such a predetermined minimum altitude may correlate to the minimum altitude dimension of the predefined noise abatement zone. If the current altitude of the aircraft is less than the predetermined minimum altitude, then the method moves out of the noise abatement departure procedure 102 and onto a non-noise abatement thrust setting at 114, which will be described below. If the current altitude of the aircraft is greater than the minimum altitude, then the method continues its noise abatement departure procedure 102 at 106. It may be understood that the determination at 104 may easily be modified to include whether the current location of the aircraft satisfies a predetermined threshold value and need not be limited to a greater than determination. For purposes of this description it may be understood that reference values may be easily selected or numerically modified such that any typical comparison may be substituted (greater than, less than, equal to, not equal to, etc.).

At 106, it may be determined whether the aircraft has reached the noise abatement zone by determining if the distance to the predetermined noise abatement start location is greater than zero. Such a predetermined noise abatement start location may correlate to the ground path dimension where the flight path may enter the predefined noise abatement zone. If it is determined that the distance to the start location is greater than zero, then the method moves out of the noise abatement departure procedure 102 and onto the non-noise abatement thrust setting at 114. If it is determined that the distance to the start location is less than zero then the method continues to 108. At 106 it is contemplated that the determination of whether the aircraft has reached the noise abatement zone may include determining if the distance of the aircraft from the origin or runway is less than the distance of the start location from the origin. It may be understood that the determination at 106 may easily be modified and need not be limited to the illustrated and described determination.

At 108, it may be determined if the aircraft has already ascended higher than the predefined noise abatement zone by determining if the height of the aircraft is greater than a predetermined maximum altitude. Such a predetermined maximum altitude may correlate to the maximum altitude dimension of the predefined noise abatement zone. If the current altitude of the aircraft is greater than the maximum altitude, then the method moves out of the noise abatement departure procedure 102 and onto the non-noise abatement thrust setting at 114. If the current altitude of the aircraft is not greater than the maximum altitude, then the method continues its noise abatement departure procedure 102 at 110.

At 110, it may be determined whether the aircraft has flown out of the noise abatement zone by determining if the distance to the predetermined noise abatement end location is less than zero. Such a predetermined noise abatement end location may correlate to the ground path dimension where the flight path is anticipated to exit the predefined noise abatement zone. If it is determined that the distance to the end location is less than zero, then the method moves out of the noise abatement departure procedure 102 and onto the non-noise abatement thrust setting at 114. If it is determined that the distance to the end location is not less than zero, then the method continues to 112. At 110 it is contemplated that the determination of whether the aircraft has flown out of the noise abatement zone may include determining if the distance of the aircraft from the origin or runway is greater than the distance of the end location from the origin. It may be understood that the determination at 110 may easily be modified and need not be limited to the illustrated and described determination.

At 112, the thrust for the aircraft may be set to a predetermined noise abatement thrust. In this manner, the aircraft may be operated at a performance profile having a noise level acceptable for the noise abatement zone. It is contemplated that operating the aircraft at a performance profile having a noise level acceptable for the noise abatement zone when the aircraft is flown within the noise abatement zone may include operating the aircraft at multiple performance profiles at 112. It is contemplated that after the thrust is set at 112 the method 100 may be return to 104 to determine if the aircraft is still within the noise abatement zone and operate the aircraft accordingly.

The non-noise abatement thrust setting at 114 is used when it is determined that the aircraft is not within the noise abatement zone. In the non-noise abatement thrust setting at 114 the thrust may be set at a higher thrust such as a takeoff thrust or a climb thrust, which would not be appropriate for the noise abatement zone. When the aircraft is flown within the noise abatement zone, it is operated at a performance profile having a lower thrust than the performance profile when the aircraft is flown outside the noise abatement zone. During the non-noise abatement thrust setting 114 it may be determined what performance profile the aircraft should be operated at and such performance profile may be at a noise level, which would not be acceptable for the noise abatement zone.

It is contemplated that after the thrust is set during the non-noise abatement thrust setting at 114 the method 100 may be repeated with the noise abatement departure procedure 102 beginning at 104. It is also contemplated that the flight path may change while the aircraft is being operated and that this may result in a change in the predetermined noise abatement zone start and end ground path locations. This may in turn result in changes to the method 100 and the determinations made in the method 100 as the flight path may intersect the noise abatement zone at alternative locations. It is also contemplated that the flight path may encounter multiple noise abatement zones during flight and/or that the flight path may have multiple intersections with a single noise abatement zone. The method may be utilized multiple times within a single flight of an aircraft to ensure that the aircraft is operated at a performance profile having a noise level acceptable for the noise abatement zones when the aircraft is flown within the noise abatement zones.

Alternatively, an embodiment of the method may include multiple noise abatement start and end locations as well as multiple minimum and maximum noise abatement altitudes in order to better specify various noise restriction zones. For example, multiple start and end locations could be used to take advantage of an unpopulated area between two noise-restricted communities resulting in a faster climb while satisfying the overall noise restrictions. Additionally, multiple altitude bands could be used to define different levels of required noise abatement.

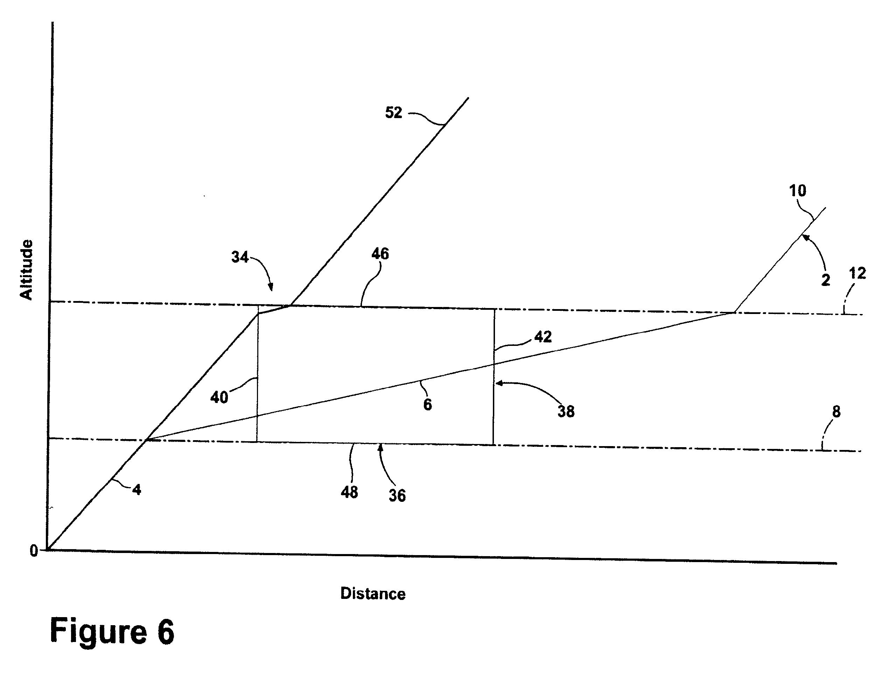

Figure 6 illustrates a comparison of the flight profile 52 from Figure 4 with the flight profile 2 from Figure 1. A comparison of the two flight profiles clearly illustrates the advantages of the method over the prior art. Whereas the known prior art methods utilize only a single factor in determining when the aircraft may be returned to a normal climb thrust setting, the above described embodiments take multiple factors into consideration in an integrated scheme where thrust is only reduced when necessary based on distance from the noise sensitive area both horizontally and vertically. This allows for more efficient airline operation while still satisfying the noise exposure constraints

Lighter aircrafts need not reduce the thrust earlier than necessary and heavier aircrafts need not keep the thrust reduced longer than necessary. Aircrafts are allowed to climb out away from airports more quickly and the faster climbs result in decreased fuel usage and less noise, as the aircraft can take advantage of flying at a higher altitude, where there are greater efficiencies realized, for a longer period of time. The contemplated methods may use flexible factors in determining a set of altitudes or locations to have thrust reduction and restore points. The above described method uses the least constraining factor to produce a flexible solution that helps to both reduce noise and maximize climb performance. This reduces the fuel usage as the more efficient cruise altitude is attained sooner.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A method of operating an aircraft (30) capable of operating at a plurality of performance profiles having differing noise levels, the method comprising:
flying the aircraft along a flight path (32);
determining when the flight path intersects a noise abatement zone (34) being two dimensional with both an altitude dimension (38) and a ground path dimension (36); and
operating the aircraft at a performance profile (52, 54, 56) having a noise level acceptable for the noise abatement zone when the aircraft is flown within the noise abatement zone.

2. The method of claim 1, wherein the ground path dimension comprises a start point (40) and an end point (42) along the ground.

3. The method of claim 2, wherein the start point (40) corresponds to the point where the flight path (32) enters the noise abatement zone (34) and the end point (42) corresponds to the point where the flight path exits the noise abatement zone (34).

4. The method of any preceding claim, wherein the altitude dimension (38) comprises a maximum altitude (46).

5. The method of claim 4, wherein the altitude dimension (38) comprises a minimum altitude (48).

6. The method of claim 5, wherein the minimum altitude (48) is above ground level.

7. The method of any preceding claim, wherein the noise abatement zone (34) is three dimensional.

8. The method of any preceding claim, further comprising operating the aircraft (30) at a performance profile having a noise level exceeding the acceptable noise level when the aircraft is flown outside the noise abatement zone (34).

9. The method of claim 8, wherein the performance profile when the aircraft (30) is flown within the noise abatement zone (34) is at a lower thrust than the performance profile when the aircraft is flown outside the noise abatement zone.

10. The method of claim 9, wherein operating the aircraft (30) at a performance profile having a noise level acceptable for the noise abatement zone (34) when the aircraft is flown within the noise abatement zone includes operating the aircraft at multiple performance profiles (52, 54, 56).

11. The method of claim 1, further comprising identifying a noise abatement zone (34) intersecting the flight path (32) prior to the aircraft (30) entering the noise abatement zone.

12. The method of claim 11, further comprising downloading to the aircraft (30) the noise abatement zone (34) dimensions and a corresponding acceptable noise level.

13. The method of claim 12, wherein the downloading the noise abatement zone (34) dimensions comprises downloading a start point (40), where the flight path (32) enters the noise abatement zone, and an end point (42), where the flight path exits the noise abatement zone.

14. The method of claim 13, wherein the start point (40) and end point (42) each comprise at least one of an altitude dimension (38) and a ground path dimension (36).

15. The method of any preceding claim, further comprising identifying a noise budget allowed within the noise abatement zone (34).

16. The method of claim 15, wherein the performance profile having the noise level acceptable for the noise abatement zone (34) is determined based on the noise identified budget.

## Patentansprüche

1. Verfahren zum Bedienen eines Flugzeugs (30), das mehrere Anforderungsprofile mit unterschiedlichen Schallpegeln ausführen kann, wobei das Verfahren Folgendes umfasst:
Fliegen des Flugzeugs entlang einer Flugbahn (32), Feststellen, wenn die Flugbahn eine Schalldämmungszone (34) schneidet, die zweidimensional ist und sowohl eine Höhendimension (38) als auch eine Breitendimension (36) aufweist, und
Bedienen des Flugzeugs bei einem Anforderungsprofil (52, 54, 56) mit einem Schallpegel, der für die Schalldämmungszone zulässig ist, wenn das Flugzeug innerhalb der Schalldämmungszone geflogen wird.

2. Verfahren nach Anspruch 1, wobei die Breitendimension einen Ausgangspunkt (40) und einen Endpunkt (42) entlang der Breite umfasst.

3. Verfahren nach Anspruch 2, wobei der Ausgangspunkt (40) dem Punkt entspricht, an dem die Flugbahn (32) in die Schalldämmungszone (34) eindringt, und der Endpunkt (42) dem Punkt entspricht, an dem die Flugbahn die Schalldämmungszone (34) verlässt.

4. Verfahren nach einem vorherigen Anspruch, wobei die Höhendimension (38) eine maximale Höhe (46) umfasst.

5. Verfahren nach Anspruch 4, wobei die Höhendimension (38) eine minimale Höhe (48) umfasst.

6. Verfahren nach Anspruch 5, wobei die minimale Höhe (48) sich über dem Erdboden befindet.

7. Verfahren nach einem vorherigen Anspruch, wobei die Schalldämmungszone (34) dreidimensional ist.

8. Verfahren nach einem vorherigen Anspruch, ferner umfassend Bedienen des Flugzeugs (30) bei einem Anforderungsprofil mit einem Schallpegel, der den zulässigen Schallpegel übersteigt, wenn das Flugzeug außerhalb der Schalldämmungszone (34) geflogen wird.

9. Verfahren nach Anspruch 8, wobei das Anforderungsprofil eine niedrigere Schubkraft hat, wenn das Flugzeug (30) innerhalb der Schalldämmungszone (34) geflogen wird, als das Anforderungsprofil, wenn das Flugzeug außerhalb der Schalldämmungszone geflogen wird.

10. Verfahren nach Anspruch 9, wobei das Bedienen des Flugzeugs (30) bei einem Anforderungsprofil mit für die Schalldämmungszone (34) zulässigem Schallpegel Bedienen des Flugzeugs bei mehreren Anforderungsprofilen (52, 54, 56) beinhaltet, wenn das Flugzeug innerhalb der Schalldämmungszone geflogen wird.

11. Verfahren nach Anspruch 1, ferner umfassend Identifizieren einer die Flugbahn (32) schneidenden Schalldämmungszone (34), bevor das Flugzeug (30) in die Schalldämmungszone eindringt.

12. Verfahren nach Anspruch 11, ferner umfassend Herunterladen der Dimensionen der Schalldämmungszone (34) und eines entsprechenden zulässigen Schallpegels zu dem Flugzeug (30).

13. Verfahren nach Anspruch 12, wobei das Herunterladen der Dimensionen der Schalldämmungszone (34) Herunterladen eines Ausgangspunkts (40), an dem die Flugbahn (32) in die Schalldämmungszone eindringt, und eines Endpunkts (42), an dem die Flugbahn die Schalldämmungszone verlässt, umfasst.

14. Verfahren nach Anspruch 13, wobei der Ausgangspunkt (40) und der Endpunkt (42) jeweils mindestens eines aus einer Höhendimension (38) und einer Breitendimension (36) umfassen.

15. Verfahren nach einem vorhergehenden Anspruch, ferner umfassend Identifizieren einer Schallhöhe, die innerhalb der Schalldämmungszone (34) zulässig ist.

16. Verfahren nach Anspruch 15, wobei das Anforderungsprofil mit dem für die Schalldämmungszone (34) zulässigen Schallpegel auf der Grundlage der identifizierten Schallhöhe festgestellt wird.

## Revendications

1. Procédé de fonctionnement d'un aéronef (30) capable de fonctionner selon une pluralité de profils de performances ayant différents niveaux de bruit, le procédé comprenant les étapes consistant à :
faire voler l'aéronef le long d'une trajectoire de vol (32) ;
déterminer à quel moment la trajectoire de vol coupe
une zone d'atténuation de bruit (34) qui est bidimensionnelle avec à la fois une dimension en altitude (38) et une dimension en trajectoire au sol (36) ; et
faire fonctionner l'aéronef selon un profil de
performances (52, 54, 56) ayant un niveau de bruit acceptable pour la zone d'atténuation de bruit lorsque l'aéronef vole dans la zone d'atténuation de bruit.

2. Procédé selon la revendication 1, dans lequel la dimension en trajectoire au sol comprend un point initial (40) et un point final (42) le long du sol.

3. Procédé selon la revendication 2, dans lequel le point initial (40) correspond au point où la trajectoire de vol (32) entre dans la zone d'atténuation de bruit (34) et le point final (42) correspond au point où la trajectoire de vol sort de la zone d'atténuation de bruit (34).

4. Procédé selon l'une quelconque des revendication précédentes, dans lequel la dimension en altitude (38) comprend une altitude maximale (46).

5. Procédé selon la revendication 4, dans lequel la dimension en altitude (38) comprend une altitude minimale (48).

6. Procédé selon la revendication 5, dans lequel l'altitude minimale (48) se situe au-dessus du niveau du sol.

7. Procédé selon l'une quelconque des revendications précédentes, dans lequel la zone d'atténuation de bruit (34) est tridimensionnelle.

8. Procédé selon l'une quelconque des revendications précédentes, comprenant en outre le fonctionnement de l'aéronef (30) selon un profil de performances ayant un niveau de bruit dépassant le niveau de bruit acceptable lorsque l'aëronef vole en dehors de la zone d'atténuation de bruit (34).

9. Procédé selon la revendication 8, dans lequel le profil de performances lorsque l'aéronef (30) vole dans la zone d'atténuation de bruit (34) se trouve à une poussée inférieure à celle du profil de performances lorsque l'aéronef vole en dehors de la zone d'atténuation de bruit.

10. Procédé selon la revendication 9, dans lequel le fonctionnement de l'aéronef (30) selon un profil de performances ayant un niveau de bruit acceptable pour la zone d'atténuation de bruit (34) lorsque l'aéronef vole dans la zone d'atténuation de bruit comprend le fonctionnement de l'aéronef selon de multiples profils de performances (52, 54, 56).

11. Procédé selon la revendication 1, comprenant en outre l'identîfîcation d'une zone d'atténuation de bruit (34) coupant la trajectoire de vol (32) avant que l'aéronef (30) ne pénètre dans la zone d'atténuation de bruit.

12. Procédé selon la revendication 11, comprenant en outre le téléchargement dans l'aéronef (30) des dimensions de la zone d'atténuation de bruit (34) et d'un niveau de bruit acceptable correspondant.

13. Procédé selon la revendication 12, dans lequel le téléchargement des dimensions de la zone d'atténuation de bruit (34) comprend le téléchargement d'un point initial (40), où la trajectoire de vol (32) pénètre dans la zone d'atténuation de bruit, et un point final (42), où la trajectoire de vol sort de la zone d'atténuation de bruit.

14. Procédé selon la revendication 13, dans lequel le point initial (40) et le point final (42) comprennent chacun au moins l'une d'une dimension en altitude (38) et d'une dimension en trajectoire au sol (36).

15. Procédé selon l'une quelconque des revendications précédentes, comprenant par ailleurs l'identification d'un budget de bruit autorisé dans la zone d'atténuation de bruit (34).

16. Procédé selon la revendication 15, dans lequel le profil de performances ayant le niveau de bruit acceptable pour la zone d'attënuation de bruit (34) est déterminé sur la base du budget identifié pour le bruit.
